# EUROPÄISCHE PATENTSCHRIFT

(11) **EP 1 285 014 B1**
(45) Veröffentlichungstag und Bekanntmachung des Hinweises auf die Patenterteilung: **10.03.2004**
(21) Anmeldenummer: 01940353.4
(22) Anmeldetag: 23.04.2001
(51) Int. Cl.: C08G 18/80

(54) **DIMETHYLPYRAZOL-BLOCKIERTE ISOCYANATGEMISCHE**
DIMETHYLPYRAZOLE-BLOCKED ISOCYANATE MIXTURES
MELANGES D'ISOCYANATES BLOQUES AU DIMETHYLPYRAZOL

(30) Priorität: 05.05.2000 DE 10022036
(43) Veröffentlichungstag der Anmeldung: 26.02.2003
(73) Patentinhaber: Bayer MaterialScience AG, 51368 Leverkusen (DE)
(72) Erfinder: KÖNIG, Eberhard, 51375 Leverkusen (DE); HALPAAP, Reinhard, 51519 Odenthal (DE); KLIMMASCH, Thomas, 51379 Leverkusen (DE); MEIER-WESTHUES, Hans-Ulrich, 51379 Leverkusen (DE); MERTES, Harald, Bayer Corp., Pittsburgh, PA 15205-9741 (US); SCHÜLL, Joachim, 50935 Köln (DE); STEINHILBER, Bernd, 51467 Bergisch Gladbach (DE)
(86) Internationale Anmeldenummer: PCT/EP2001/004546
(87) Internationale Veröffentlichungsnummer: WO 2001/085823

(56) Entgegenhaltungen:
- EP-A- 0 159 117
- EP-A- 0 713 871

## Beschreibung

Die Erfindung betrifft bestimmte Gemische von Polyisocyanaten, die mit 3,5-Dimethylpyrazol blockiert sind und deren Verwendung als Vernetzerkomponente in Einkomponenten-Einbrennlacken, insbesondere Automobilklarlacken.

Die Formulierung von OH-haltigen Polyacrylatharzen mit blockierten Polyisocyanaten oder mit Gemischen aus Melaminharzen und blockierten Polyisocyanaten zu Bindemitteln für "einkomponentige" Einbrennlacke ist Stand der Technik. Die Eigenschaften daraus hergestellter Lacke werden dabei sowohl von der Art der Polyisocyanatkomponente als auch des Blockierungsmittels mitbestimmt, da bekanntlich von letztgenanntem immer ein gewisser Anteil im Lack verbleibt.

3,5-Dimethylpyrazol, kurz DMP, wird als NCO-Blockierungsmittel bei Einbrennlacken erstmalig in der EP-A 0159117B1 genannt. Ein Vergleich der Blockierungsmittel Butanonoxim, 1,2,4-Trizaol und DMP wird in Farbe & Lack 7/96, 102. Jahrgang, S. 51-58, (Engbert et. al.) beschrieben. Diese Untersuchung zeigt, dass DMP hinsichtlich der Einbrenntemperatur und der thermischen Vergilbungsresistenz Vorteile gegenüber Butanonoxim aufweist. Weiter wurde gefunden, dass die Säurebeständigkeit eines Klarlackes, der auf einem mit DMP blockierten IPDI-Polyisocyanat basiert, sehr gut ist und nur von dem analogen Zweikomponentenlack (ohne Blockierungsmittel) gering übertroffen wird. Über die Kratzfestigkeit dieses Klarlackes wird nichts mitgeteilt.

Säure- und Kratzbeständigkeit sind wesentliche Eigenschaftskriterien eines Automobilklarlackes als oberster Schicht, die beispielsweise dem Einfluss umgebender Atmosphäre und auch den Bedingungen einer Waschstraße standhalten muss. In der oben zitierten Untersuchung zeigt ein Klarlack, bei dem 1,2,4-Triazol als Blockierungsmittel eingesetzt wird, deutlich schlechtere Eigenschaften, z.B. in der Säurebeständigkeit.

In der Veröffentlichung European Coatings Conference, Berlin 1999, Vincentz Verlag, "Blocked Isocyanates - "Methods of Evaluation and Recent Developments", I. Rimmer et. al., Baxenden Chemicals" werden hauptsächlich Deblockierungstemperaturen von DMP-blockierten Isocyanaten mitgeteilt. Die Frage, wie man mit einem DMP-blockierten Polyisocyanat einen Klarlack mit sowohl guter Kratzbeständigkeit als auch guter Säurebeständigkeit herstellen kann, wird aber nicht angesprochen.

Die Aufgabe der Erfindung ist es, blockierte Polyisocyanate zu entwickeln, die zu einem Einbrennlack mit
1. guter Säurebeständigkeit
2. guter Kratzfestigkeit
3. guter Resistenz gegen Thermovergilbung
   und
4. einer relativ niedrigen Einbrenntemperatur von 130 - 150 °C (bei 30 min)
verarbeitet werden können.

Diese Aufgabe konnte mit den erfindungsgemäßen blockierten Polyisocyanatmischungen gelöst werden.

Gegenstand der Erfindung sind Gemische aus blockierten Polyisocyanaten, enthaltend
a) blockierte Polyisocyanate auf Basis von 1,6-Diisocyanatohexan (HDI),
b) blockierte Polyisocyanate auf Basis von cycloaliphatischen Diisocyanaten und
c) 3,5-Dimethylpyrazol als alleinigem Blockierungsmittel der unter a) und b) genannten Polyisocyanate, dadurch gekennzeichnet, dass die blockierten Polyisocyanate in den Mengenverhältnissen a) : b) = 1:1,8 bis 2,2 vorliegen.

Gegenstand der Erfindung ist auch die Verwendung der erfindungsgemäßen blockierten Polyisocyanat-Mischungen im Gemisch mit Melaminharzen bei der Aushärtung von Einbrennlacken, dadurch gekennzeichnet, dass bis zu 50 Gew.-%, bezogen auf Gesamt-Härterkomponente, an den blockierten Polyisocyanat-Mischungen a) + b) mitverwendet werden.

Gegenstand der Erfindung ist schließlich die Verwendung der erfindungsgemäßen blockierten Polyisocyanat-Gemische als Härterkomponente in Einkomponenten-Einbrennlacken, insbesondere für Automobil-Klarlacke.

Die erfindungsgemäßen Gemische stellen eine Kombination aus der flexiblen blockierten Polyisocyanat-Komponente a) und der harten blockierten Polyisocyanat-Komponente b) dar, wobei sich die Mischungsverhältnisse in den Grenzen a:b = 1:1,8 bis a:b = 1:2,2 bewegen. Bevorzugt ist ein Mischungsverhältnis von a:b = 1:2.

Als Polyisocyanate für die Komponente a) kommen die an sich bekannten Biuret-, Isocyanurat-, Allophanat-, Iminooxadiazindion (asymmetrisches Trimeres)-, Urethan- und/oder Uretdiongruppen aufweisende Lackpolyisocyanate auf Basis von 1,6-Diisocyanatohexan (HDI) mit einem NCO-Gehalt von 19 bis 25 Gew.-% in Betracht. Bevorzugt sind die überwiegend Isocyanuratgruppen enthaltenden Lackpolyisocyanate auf Basis von HDI, kurz trimerisiertes HDI.

Als Polyisocyanate für die Komponente b) kommen die an sich bekannten Isocyanurat-, Allophanat-, Uretdion- und Urethangruppen aufweisenden Lackpolyisocyanate auf Basis von cycloaliphatischen Diisocyanaten mit einem NCO-Gehalt von 12 bis 23 Gew.-% in Betracht. Beispiele für cycloaliphatische Diisocyanate sind 1-Isocyanato-3,3,5-trimethyl-5-isocyanatomethyl-cyclohexan(IPDI), Bis-(4-isocyanatocyclohexyl)-methan (H₁₂ MDI bzw. Desmodur W®/Bayer AG), 2,6- und/oder 2,5-Bisisocyanato-norboman oder 1,4-Bisisocyanatomethyl-cyclohexan. Es können auch 1:1-Mischungen von Polyisocyanaten auf Basis von IPDI und Desmodur W® eingesetzt werden. Bevorzugt sind überwiegend Isocyanuratgruppen enthaltende Lackpolyisocyanate auf Basis von IPDI und Desmodur W®. Ein Lackpolyisocyanat auf Basis von trimerisiertem IPDI stellt ein Festharz mit einem NCO-Gehalt von ca, 17 Gew.-% dar und kommt daher als 70 %ige Lösung mit einem NCO-Gehalt von ca. 12 Gew.-% in den Handel. Ein Isocyanuratgruppen enthaltendes Polyisocyanat auf Basis von Desmodur W® wird im Beispiel 6 beschrieben.

Das NCO-Blockierungsmittel 3,5-Dimethylpyrazol ist ein farbloser Feststoff (Fp. 107°C), den man durch Kondensation von 1 Mol Acetylaceton mit 1 Mol Hydrazinhydrat relativ leicht und quantitativ gewinnen kann. Man kann zur Blockierung der Isocyanate aber auch die warme Reaktionslösung aus den genannten Edukten, wie z.B. in der EP-A 0713871B1 beschrieben, einsetzen. Erfindungsgemäß sind alle Isocyanatgruppen der eingesetzten Isocyanate blockiert, so dass keine freien Isocyanatgruppen in den erfindungsgemäßen Mischungen vorliegen.

Die erfindungsgemäßen blockierten Polyisocyanat-Mischungen werden mit organischen Polyhydroxylverbindungen auf übliche Weise zu Einkomponenten-Lackbindemitteln vermischt, indem die Menge an blockierten NCO-Gruppen mit der entsprechenden Menge OH-Gruppen kombiniert wird. Das stöchiometrische Verhältnis von blockiertem NCO:OH =1:1.

Wenn man einen einkomponentigen Einbrennlack überwiegend z.B. mit Melaminharz vemetzt und die erfindungsgemäße blockierte Polyisocyanat-Mischung als Modifizierungskomponente einsetzt, so muss das Mischungsverhältnis der Bindemittelkomponenten empirisch ermittelt werden. Einen Anhaltspunkt für die Mengenverteilung von Polyacrylat : Melaminharz : blockierter Polyisocyanat-Mischung bietet dabei das in den Beispielen erläuterte Verhältnis von 70:20:10 Gew.-%, bezogen auf die jeweiligen Festharze. Bei dieser Mischvernetzung liegen die Vernetzerkomponenten nämlich Melaminharz und blockierte Polyisocyanat-Mischung im Gewichtsverhältnis 2:1 vor. Je nach gewünschtem Effekt, ob man also überwiegend eine Melaminharzvemetzung oder eine Vernetzung mit blockierten Polyisocyanaten bevorzugt, kann dieses obige Mischungsverhältnis zwischen 5:1 und 1:2 variiert werden.

Mit den erfindungsgemäßen blockierten Polyisocyanat-Mischungen werden Klarlacke mit guter Säurebeständigkeit, Kratzfestigkeit und Thermovergilbungsresistenz erhalten.

### Beispiele

### Beispiel 1

Es wird der Aufbau von blockierten Polyisocyanatkomponenten beschrieben.

### a) Ansatz

| | | |
|---|---|---|
| 196 g (1,0 val) | eines isocyanurathaltigen Lackpolyisocyanates auf Basis von 1,6-Diisocyanatohexan (HDI) mit einem NCO-Gehalt von 21,4 Gew.-%, einer Viskosität bei 23°C von ca. 3000 mPas und einer Funktionalität von ca. 3,5. | |
| 100 g (1,05 mol) | 3,5-Dimethylpyrazol (DMP) | |
| 34 g | 1-Methoxy-propylacetat (MPA) | |
| 65 g | Solventnaphta 100 | |
| 395 g (1,0 val) | blockierte NCO-Gruppen | |
| | | |
| | Festkörpergehalt: | (296 g) 75 Gew.-% |
| | Viskosität bei 23°C: | ca. 4000 mPas |
| | Blockierter NCO-Gehalt: | 10,6 Gew.-% |
| | 1 val block. NCO-Gruppen: | 395 g |

### Durchführung:

Polyisocyanat und Lösemittelgemisch werden vorgelegt. Unter Rühren gibt man portionsweise festes DMP bei 75 bis 85°C hinzu und rührt ca. 1 Std. bei 80°C, bis keine NCO-Gruppen mehr nachweisbar sind. Man erhält eine klare, leicht gelbliche (Hazen 30-40) Lösung mit den oben genannten Kennzeichen.

### b) Ansatz

| | | |
|---|---|---|
| 350,0 g (1,0 val) | eines isocyanurathaltigen Lackpolyisocyanates auf Basis von 1-Isocyanato-3,3,5-trimethyl-5-isocyanatomethyl-cyclohexan (IPDI), 70 %ig gelöst in Butylacetat und mit einem NCO-Gehalt von 12,0 Gew.-% | |
| 100,0 g (1,05 mol) | 3,5-Dimethylpyrazol (DMP) | |
| 125,0 g | Solventnaphta 100 | |
| 575,0 g (1,0 val) | blockierte NCO-Gruppen | |
| | | |
| | Festkörpergehalt: | (345 g) 60 Gew.-% |
| | Viskosität bei 23°C: | ca. 2000 mPas |
| | Blockierter NCO-Gehalt: | 7,3 Gew.-% |
| | 1 val block. NCO-Gruppen: | 575 g |

### Durchführung:

Polyisocyanat und Lösemittel werden vorgelegt. Unter Rühren gibt man portionsweise festes DMP bei 85 bis 95°C hinzu und rührt ca. 1 Stunde bei 95°C, bis kein NCO-Gehalt mehr nachweisbar (IR-Spektrum) ist. Man erhält eine klare, leicht gelbe Lösung mit den oben genannten Kennzeichen.

### Beispiel 2 (erfindungsgemäß)

Es wird das erfindungsgemäße Gemisch aus den beiden blockierten Polyisocyanatkomponenten der Beispiele 1a + 1b im Gewichtsverhältnis 1:2 sowie ein daraus hergestelltes Lackbindemittel gezeigt.

| | **Menge [g]** | **Val block. NCO** | **Festkörper [g]** | **Gew. Verh. a/b** |
|---|---|---|---|---|
| block. Polyisocyanat a) vergl. Beispiel 1a) | 145,4 | 0,368 | 109 | **1** |
| | | | | |
| block. Polyisocyanat b) vergl. Beispiel 1b) | 363,4 | 0,632 | 218 | 2 |
| | **508,8** | **1,000** | 427 | |

Die erfindungsgemäße blockierte Polyisocyanatmischung wird mit dem Polyacrylat Desmophen® A VP LS 2009/1 (70%ig in Butylacetat, OH-Gehalt 3 Gew.-%, 1 val OH-Gruppen = 566 g, Bayer AG) zu einem Lackbindemittel, wie folgt, kombiniert.

### Lackbindemittel

| | **Menge [g]** | **Äquivalente block. NCO bzw. OH** | **Reduzierte Mengen in g für Lack- ansatz = 100%** |
|---|---|---|---|
| block. Polyisocyanat a) vergl. Beispiel 1a) | 145,4 | 0,368 | 9,8 |
| | | | |
| block. Polyisocyanat b) vergl. Beispiel 1b) | 363,4 | 0,632 | 24,6 |
| Desmophen A VP LS 2009/1 70 % in Butylacetat, OH-Äquivalent 566 g | 566,0 | 1,00 | 38,4 |
| | **1074,8** | | **72,8** |

### Beispiel 3 (erfindungsgemäß)

Es werden Lackansätze sowohl mit dem erfindungsgemäßen blockierten Polyisocyanatgemisch gemäß Beispiel 2 als auch mit einem Vergleich hergestellt, 30 min bei 140°C eingebrannt und auf Säurebeständigkeit, Kratzfestigkeit sowie Thermovergilbungsstabilität hin beurteilt.

### a) Lackansätze

| **Zusammensetzung [Gew. -%]** | **Lack 1 (erfindungsgemäß)** | **Lack 2 (Vergleich)** |
|---|---|---|
| Desmophen A VP LS 2009/1, 70%ig in BA | 38,4 | 36,7 |
| Block. Polyisocyanat gemäß Beispiel 1a | 9,8 | - |
| Block. Polyisocyanat gemäß Beispiel 1b | 24,6 | 37,3 |
| | **72,8** | **74,0** |
| | | |
| Dibutylzinndilaurat, 10 % in Xylol (Brenntag AG) | 4,9 | 4,8 |
| Baysilone OL 17, 10 % in Xylol, (Bayer AG) | 0,5 | 0,5 |
| Modaflow, 1 % in Xylol, (Monsanoto Co., St. Louis) | 0,5 | 0,5 |
| Tinuvin 292, 10 % in Xylol, (Ciba Speciality Chemicals | 4,9 | 4,8 |
| Inc. Basel) | | |
| Tinuvin 1130, 10 % in Xylol, (siehe oben) | 9,8 | 9,6 |
| 1-Methoxypropylacetat/Solventnaphta 100 (1/1) | 4,7 | 3,9 |
| Butylglykolacetat | 1,9 | 1,9 |
| | **100,0** | **100,0** |

In beiden Lackansätzen ist das Verhältnis von blockierten NCO-Gruppen zu OH-Gruppen gleich 1,0. Im Unterschied zu dem erfindungsgemäßen Lack 1 wird in Lack 2 nur eine der beiden blockierten Polyisocyanatkomponenten eingesetzt.

Die Lackansätze 1 und 2 werden als Klarlacke auf Prüfbleche mit einem weißen Wasser- Basislack gesprüht und 30 min bei 140°C eingebrannt.

### b) Lackbeurteilung

| | **Lack 1 (erfindungsgemäß)** | **Lack 2 (Vergleich)** |
|---|---|---|
| Säurebeständigkeit [°C] | | |
| (Gradientenofen, Daimler-Chrysler-Prüfmethode) | | |
| H₂SO₄, 1% | 51 | 53 |
| Kratzfestigkeit | | |
| (Laborwaschanlage, DFO¹⁾-Prüfmethode, DIN-Norm in Vorbereitung) | | |
| Ausgangsglanz 20° | 90,6 | 91,4 |
| Glanzverlust (Δ Gl.) nach | | |
| 10 Waschzyklen 20° | 30,3 | 40,6 |
| Relativer Restglanz [%] | 66,6 | 55,6 |
| Thermovergilbungsstabilität | | |
| (Farbmetrische Bestimmung, CIELAB; DIN 6174) | | |
| Klarlack auf Wasser-Basislack, weiß | | |
| | | |
| Ausgangsvergilbung [b-Wert] | -1,5 | -1,7 |
| Überbrennvergilbung bei 30 min 160°C [Δb] | 0,3 | 0,4 |

| | | |
|---|---|---|
| ¹⁾DFO = Deutsche Forschungsgesellschaft für Oberflächenbehandlung e.V. | | |

Wie man erkennt, ist die Säurebeständigkeit des Vergleichslackes mit 53°C gering besser als die des erfindungsgemäßen mit 51°C, was einen guten Wert darstellt.

Dagegen ist bei der Kratzfestigkeitsmessung der Restglanz des erfindungsgemäßen Lack 1 um 11 % höher als beim Lack 2.

Beide Lacke sind gleich gut thermovergilbungsstabil.

### Beispiel 4

Es werden Bindemittel beschrieben, bei denen das OH-haltige Polyacrylat überwiegend mit Melaminharz und nur zu 10 % Gew.-%, bezogen auf Bindemittel, mit blockiertem Polyisocyanat gehärtet wird. Als optimales Mischungsverhältnis der drei Bindemittelkomponenten OH-Polyacrylat: Melaminharz: blockiertes Polyisocyanat, wurde ein Festharz-Verhältnis von 70:20:10 ermittelt. Auch hier wird gezeigt, dass ein Klarlack, bei dem 10 Gew.-% des Bindemittels aus der erfindungsgemäßen blockierten Polyisocyanat-Mischung besteht, am besten abschneidet.
a) Melaminharz und erfindungsgemäße blockierte Polyisocyanat-Mischung enthaltendes Bindemittel (erfindungsgemäß) 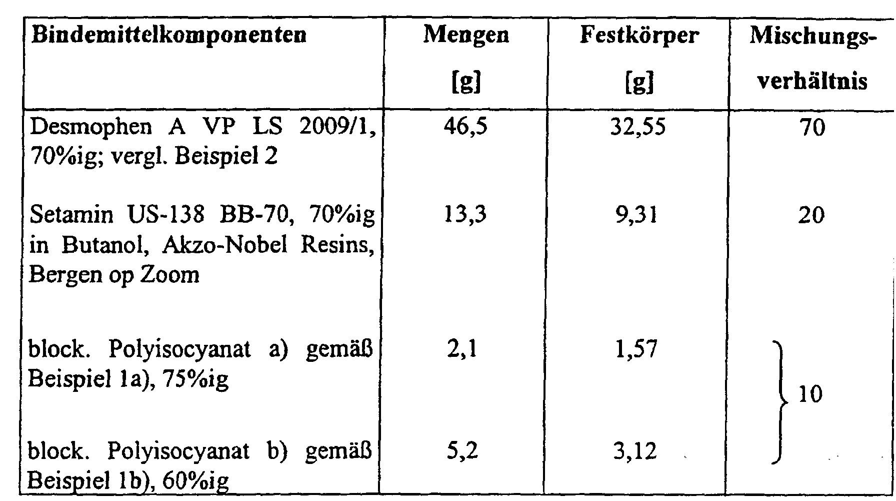
Wie man aus obiger Tabelle erkennt, liegen die beiden blockierten Polyisocyanate im erfindungsgemäßen Mischungsverhältnis Komp. a : Komp. b = 1:2 vor.
b) Bindemittel mit Melaminharz und blockiertem Polyisocyanat (Vergleich)

| **Bindemittelkomponenten** | **Mengen [g]** | **Festkörper [g]** | **Mischungsverhältnis** |
|---|---|---|---|
| Desmophen A VP LS 2009/1, 70%ig; vergl. Beispiel 2 | 46,7 | 32,7 | 70 |
| | | | |
| Setamin US-138 BB-70, 70%ig, vergl. Beispiel 4a) | 13,3 | 9,3 | 20 |
| | | | |
| block. Polyisocyanat a) gemäß Beispiel 1a), 75%ig | 6,2 | 4,65 | 10 |

c) Bindemittel nur mit dem Melaminharz-Vernetzer (Vergleich)

| **Bindemittelkomponenten** | **Mengen [g]** | **Festkörper [g]** | **Mischungsverhältnis** |
|---|---|---|---|
| Desmophen A VP LS 2009/1, 70%ig; vergl. Beispiel 2 | 47,6 | 33,32 | 70 |
| | | | |
| Setamin US-138 BB-70, 70%ig, Vergleich Beispiel 4a) | 20,4 | 14,28 | 30 |

### Beispiel 5

Es werden Klarlackansätze mit zwei verschiedenen Melaminharz/Polyisocyanat-Mischvemetzungen, einer reinen Melaminharz-Vernetzung und die vergleichende Lackprüfung beschrieben.
**a) Lackansätze**

| **Zusammensetzung in Gew.-%** | **Lack 3 (erfindungsgemäß vergl. Beispiel 4a)** | **Lack 4 (vergl. Beispiel 4b)** | **Lack 5 (vergl. Beispiel 4c)** |
|---|---|---|---|
| Desmophen A VP LS 2009/1 | 46,5 | 46,7 | 47,6 |
| | | | |
| Setamin US-138 BB-70 | 13,3 | 13,3 | 20,4 |
| | | | |
| block. Polyisocyanat a) gemäß Beispiel 1 a) | 2,1 | 6,2 | - |
| | | | |
| block. Polyisocyanat b) gemäß Beispiel 1 b) | 5,2 | - | - |
| | | | |
| Dibutylzinndilaurat, siehe Beispiel 3a) | 2,6 | 2,6 | - |
| | | | |
| p-Toluolsulfonsäure, 10% in Xylol, Merck-Schuchardt | 1,0 | 1,0 | 1,0 |
| | | | |
| Baysilone OL 17, siehe Beispiel 3a) | 0,5 | 0,5 | 0,5 |
| | | | |
| Modaflow, siehe Beispiel 3a) | 0,5 | 0,5 | 0,5 |
| | | | |
| Tinuvin 292, siehe Beispiel 3a) | 5,1 | 5,1 | 5,2 |
| | | | |
| Tinuvin 1130, siehe Beispiel 3a | 10,2 | 10,2 | 10,4 |
| | | | |
| 1-Methoxyproylacetat/Solventnaphta | 10,7 | 11,6 | 12,0 |
| | | | |
| Butylglykolacetat | 2,3 | 2,3 | 2,4 |
| | **100,0** | **100,0** | **100,0** |

Der Lack 3 enthält die erfindungsgemäße blockierte Polyisocyanat-Mischung in einer Menge von 10 Gew.-%, bezogen auf Festkörper des Bindemittels. Lack 4 stellt ebenfalls wie Lack 3 eine Mischvernetzung mit Melaminharz/blockiertem Polyisocyanat dar, aber ohne die erfindungsgemäße Polyisocyanat-Mischung. Lack 5 ist eine reine Melaminharzvernetzung.
**b) Lackbeurteilung**
Die Lackansätze 3 bis 5 werden als Klarlacke auf Prüfbleche mit einem weißen Wasser-Basislack gespritzt und 30 min bei 140°C eingebrannt. 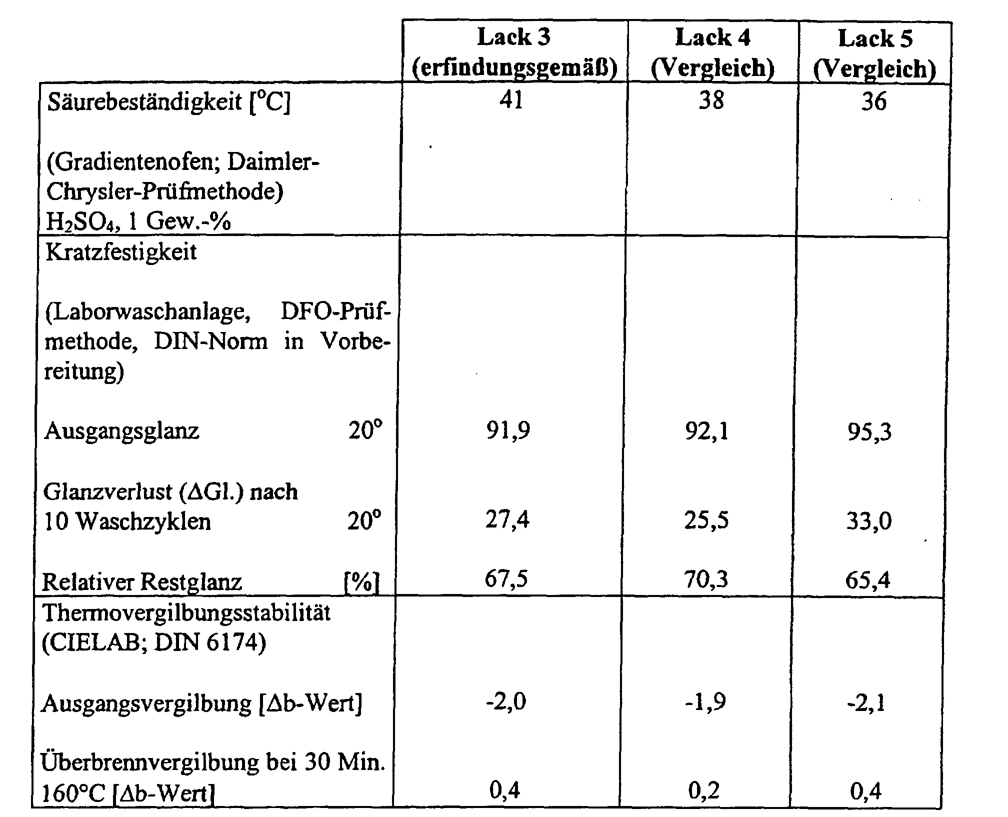
In obiger Übersicht zeigt Lack 3 mit 41 °C die höchste Säurebeständigkeit. Allerdings liegt diese um 10°C niedriger als bei der reinen Polyisocyanat-Vernetzung gemäß Beispiel 3 b). Lack 5 weist mit nur noch 65,4 % Restglanz die höchste Verkratzung auf. Die Überbrennvergilbung ist sehr gering und bei allen drei Lackvarianten in Ordnung. Lack 3 (erfindungsgemäß) schneidet besser als Lack 4 und deutlich besser als Lack 5 ab.

### Beispiel 6 (erfindungsgemäß)

Es wird die Herstellung eines DMP-blockierten Desmodur W-Trimerisates, die entsprechende Bindemittelkombination und die Beurteilung des Klarlackes beschrieben.
a) Herstellung des DMP-blockierten Desmodur W® Trimerisates
**Ansatz:**
1) Trimerisierung

| | | | |
|---|---|---|---|
| 2,0 val | Desmodur W | = 262,0 g | |
| 0,7 val | Trimerisierung mit 10%iger Triton | = - | |
| | B-Lösung | | |
| 1,3 val | Desmodur W antrimerisiert | = 262,0 g | NCO: Ber. 20,8% |
| | | | Gef. 20,3% |
| | Butyldiglykolacetat (BDGA) | = 65,5 g | |
| 1,3 val | antrimerisiertes Desmodur W | = 327,5 g | NCO: Ber. 16,67% |
| | | | Gef. 16,13% |
| 1,0 val | antrimerisiertes Desmodur W, | | |
| | 80 %ig in BDGA | = 260,4 g | |

2) Blockierung

| | | |
|---|---|---|
| 1,0 val | antrimerisiertes Desmodur W | = 260,4 g |
| 1,05 mol | 3,5-Dimethylpyrazol (DMP) | = 100,8 g |
| | 1-Methoxypropylacetat (MPA) | = 154,0 g |
| 1,0 val | DMP-blockiertes Desmodur W- | = 515,2 g |
| | Trimerisat | |
| | | |
| | Festkörpergehalt: | 309,12 g, 60 Gew.-% |
| | Viskosität bei 23°C: | 1850 mPas |
| | blockierter NCO-Gehalt: | 8,15 Gew.-% |

### Durchführung:

1) Desmodur W wird mittels Vakuum von CO₂ befreit und bei 85°C unter Rühren vorgelegt. Triton B-Lösung, 10 %ig in n-Butanol, wird anfänglich mit ca. 2 ml, später sehr fein hinzudosiert, so dass die exotherme Reaktion immer bei 85 bis 90°C gehalten wird. Nach 3 ½ Sunden bei 90°C und einem Verbrauch an Katalysatorlösung von 11,7 ml wird ein NCO-Gehalt von 20,3 Gew.-% gefunden. Man verdünnt mit Butyldiglykolacetat und lässt erkalten.
2) Antrimerisiertes Desmodur W und MPA werden bei 80°C vorgelegt. Unter Rühren trägt man DMP in größeren Portionen ein und setzt bei 90°C ca. 1 Stunde um, bis keine NCO-Gruppen mehr nachweisbar (IR-Spektrum) sind. Man erhält eine klare, leicht gelbliche Lösung mit den oben genannten Kennzeichen.
b) Herstellung des erfindungsgemäßen Gemisches aus der flexiblen und der harten blockierten Polyisocyanatkomponente im Gewichtsverhältnis 1:2 und eines Lackbindemittels analog Beispiel 2.

| | **Menge [g]** | **Festkörpergehalt [g]** | **Gew.-Verh. a/b** | **vale block. NCO-Gruppen** |
|---|---|---|---|---|
| block. Polyisocyanat a) gemäß Beispiel 1a) - Basis: HDI-Trimerisat | 140,2 | 105,0 | 1 | 0,355 |
| block. Polyisocyanat b) gemäß Beispiel 6a) - Basis: Desmodur W®-Trimerisat | 332,3 | 210,0 | 2 | 0,645 |
| | **472,5** | **315,0** | | **1,000** |

Aus der obigen erfindungsgemäßen Vernetzermischung wird das Lackbindemittel analog Beispiel 2, wie folgt, gebildet:

### Lackbindemittel

| | **Menge [g]** | **Äquivalente block. NCO bzw. OH** | **Reduzierte Menge in g für Lackansatz = 100 g** |
|---|---|---|---|
| block. Polyisocyanat a) gemäß Beispiel 1a) | 140,2 | 0,355 | 9,8 |
| block. Polyisocyanat b) gemäß Beispiel 6a) | 332,3 | 0,695 | 23,3 |
| Desmophen A VP LS 2009/1, 70%ig in Butylacetat, OH-Äquivalent = 566 g | 566,0 | 1,000 | 39,6 |
| | **1038,5** | | **72,7** |

Dieses Lackbindemittel wird, wie in Beispiel 3 gezeigt, mit Additiven und Lösemitteln zu einem sprühfertigen Klarlack verarbeitet und auf Prüfbleche mit einem weißen Wasser-Basislack gesprüht und 30 min. bei 140°C eingebrannt.

### c) Lackbeurteilung

| | |
|---|---|
| Säurebeständigkeit [°C] (vergl. Beispiel 3b) H₂SO₄, 1 % | 50 |
| Kratzfestigkeit (vergl. Beispiel 3b) | |
| Ausgangsglanz 20 ° | 90,9 |
| Glanzverlust nach 10 Waschzyklen 20° | 26,2 |
| Relativer Restglanz [%] | 71,2 |
| Überbrennvergilbung bei 30 min 160 °C (vergl. Beispiel 3b) | |
| [Δb] | 0,5 |

Wie man im Vergleich mit Lack 1 gemäß dem Beispiel 3b) (HDI-/IPDI-Trimerisat = 1:2 Gew.-Verhältnis) sieht, gibt es bei dem obigen Lack (HDI-/W-Trimerisat = 1:2 Gew.-Verhältnis) Vorteile bei der Kratzfestigkeit. Säurebeständigkeit und Überbrennvergilbung haben die gleich guten Werte.

## Patentansprüche

1. Gemische aus blockierten Polyisocyanaten, enthaltend
a) blockierte Polyisocyanate auf Basis von 1,6-Diisocyanatohexan (HDI),
b) blockierte Polyisocyanate auf Basis von cycloaliphatischen Diisocyanaten und
c) 3,5-Dimethylpyrazol als alleiniges Blockierungsmittel der unter a) und b) genannten Polyisocyanate, **dadurch gekennzeichnet, dass** die blockierten Polyisocyanate in den Mengenverhältnissen a) : b) = 1:1,8 bis 2,2 vorliegen.

2. Verwendung der blockierten Isaocyanatgemische nach Anspruch 1 im Gemisch mit Melaminharzen bei der Aushärtung von Einbrennlacken, **dadurch gekennzeichnet, dass** bis zu 50 Gew.-%, bezogen auf Gesamt-Härterkomponente, an den blockierten Polyisocyant-Mischungen a) + b) mitverwendet werden.

3. Verwendung der blockierten Isocyanatgemische nach Anspruch 1 als Härterkomponente in Einkomponenten-Einbrennlacken, insbesondere für Automobil-Klarlacke.

## Claims

1. Mixtures of blocked polyisocyanates containing
a) blocked polyisocyanates based on 1,6-diisocyanatohexane (HDI),
b) blocked polyisocyanates based on cycloaliphatic diisocyanates, and
c) 3,5-dimethylpyrazole as the sole blocking agent for the polyisocyanates mentioned under a) and b), **characterised in that** the blocked polyisocyanates are present in relative proportions of a) : b) = 1:1.8 to 2.2.

2. Use of the blocked polyisocyanate mixtures according to claim 1 in admixture with melamine resins in the hardening of stoving lacquers, **characterised in that** up to 50 wt.%, based on total hardener component, of the blocked polyisocyanate mixtures a) + b) are used concomitantly.

3. Use of the blocked isocyanate mixtures according to claim 1 as hardener component in single-component stoving lacquers, especially for automotive clear lacquers.

## Revendications

1. Mélanges de polyisocyanates bloqués contenant
a) des polyisocyanates bloqués à base de 1,6-diisocyanataohexane (HDI),
b) des polyisocyanates bloqués à base de diisocyanates cycloaliphatiques et
c) du 3,5-diméthylpyrazole comme seul agent bloquant des polyisocyanates cités sous a) et b), **caractérisés en ce que** les polyisocyanates bloqués sont présents dans les rapports de quantité a) : b) = 1:1,8 à 2,2.

2. Mise en oeuvre des mélanges d'isocyanates bloqués selon la revendication 1 en mélange avec des résines de mélamine pour le durcissement de vernis à cuire, **caractérisée en ce que** jusqu'à 50% en poids, par rapport au composant durcisseur total, des mélanges de polyisocyanates bloqués a) + b) sont utilisés également.

3. Mise en oeuvre des mélanges d'isocyanates bloqués selon la revendication 1 comme composant durcisseur dans des vernis à cuire monocomposant, en particulier pour les vernis transparents pour le secteur automobile.
